**Europäisches Patentamt**

**European Patent Office**

**Office européen des brevets**

(19)

(11) Numéro de publication : **0 378 947 B1**

(12)

# FASCICULE DE BREVET EUROPEEN

(45) Date de publication du fascicule du brevet :
**16.12.92 Bulletin 92/51**

(51) Int. Cl.⁵ : **F16K 11/07**

(21) Numéro de dépôt : **89403611.0**

(22) Date de dépôt : **22.12.89**

(54) **Soupape de purge.**

(30) Priorité : **20.01.89 FR 8900653**

(43) Date de publication de la demande :
**25.07.90 Bulletin 90/30**

(45) Mention de la délivrance du brevet :
**16.12.92 Bulletin 92/51**

(84) Etats contractants désignés :
**DE ES FR GB IT**

(56) Documents cités :
**DE-A- 2 751 794**
**FR-A- 2 548 609**
**GB-A- 1 105 832**
**US-A- 3 072 149**

(73) Titulaire : **BENDIX EUROPE Services Techniques S.A.**
**126 rue de Stalingrad**
**F-93700 Drancy (FR)**

(72) Inventeur : **Vasselet, Joel Bendix Europe Services Techniques**
**126 rue de Stalingrad**
**F-93700 Drancy (FR)**

EP 0 378 947 B1

## Description

La présente invention concerne une soupape de purge pour un circuit hydraulique notamment de freinage pour véhicule automobile comprenant un piston coulissant dans un alésage et pouvant prendre au moins une position stable tant que la force appliquée au piston est inférieure à un seuil déterminé.

Ces soupapes de purge à position stable du piston comportent généralement un ressort précontraint appuyant sur le piston à l'encontre de la force qui lui est appliquée. Dès que cette force dépasse le seuil défini par la précontrainte, le différentiel des pressions engendrées par les deux forces opposées tend à mouvoir le piston proportionnellement à ce différentiel. Pour certaines applications, comme celle qui sera décrite ci-après, il est nécessaire d'obtenir un fonctionnement en tout ou rien. La présente invention a donc pour objet une telle soupape de purge qui soit fiable et peu onéreux.

Une telle soupape de purge est particulièrement utile pour réaliser une soupape de purge telle que mise en oeuvre par les constructeurs d'automobile pour purger les circuits de freinage avant d'introduire le liquide de frein. Une soupape de purge assurant cette fonction est décrite dans FR-A-2 548 609 selon lequel la première position stable n'est obtenue que grâce au frottement exercé par un joint torique d'étanchéité disposé entre le piston et l'alésage dans lequel il coulisse. Il n'est cependant pas souhaitable dans le métier qu'un joint d'étanchéité ait une seconde fonction. En outre, un choc malencontreux peut amener le piston hors de la position stable initiale, ce qui conduit à interdire l'opération de purge sans intervention manuelle initiale sur la pièce défectueuse.

La présente invention a donc pour objet une soupape de purge pour circuit hydraulique, notamment de freinage, comportant un réservoir de liquide, un moteur hydraulique et un mécanisme de mise sous pression du liquide, la soupape ayant un premier orifice relié au moteur et au mécanisme par un premier conduit, et un second orifice relié par un deuxième conduit au réservoir qui est lui-même relié par un troisième conduit au mécanisme, les premier et deuxième conduits communiquant entre eux par l'intermédiaire de la soupape pendant la phase de purge initiale du circuit hydraulique et ne communiquant plus dès la première mise sous pression du liquide, la soupape comprenant un piston pouvant coulisser dans un alésage étagé et maintenant ouvert le clapet de la soupape pendant la phase de purge, à l'encontre d'un ressort comprimé.

Selon l'invention, un jonc annulaire flexible qui est disposé dans une gorge annulaire formée à la périphérie du piston, coopère avec une rampe constituée par la partie intermédiaire entre les deux parties de l'alésage pour maintenir en position stable le piston tant que la pression du liquide dans le circuit hydraulique est inférieure à un seuil déterminé.

L'invention sera mieux comprise et d'autres buts, avantages et caractéristiques apparaitront plus clairement à la lecture de la description qui suit de modes préférés de réalisation donnés à titre non limitatif et à laquelle une planche de dessin est annexée sur laquelle :

- la Figure 1 représente schématiquement un dispositif hydraulique à position stable du piston qui ne constitue pas l'invention, et
- la Figure 2 représente schématiquement une soupape de purge conforme à l'invention.

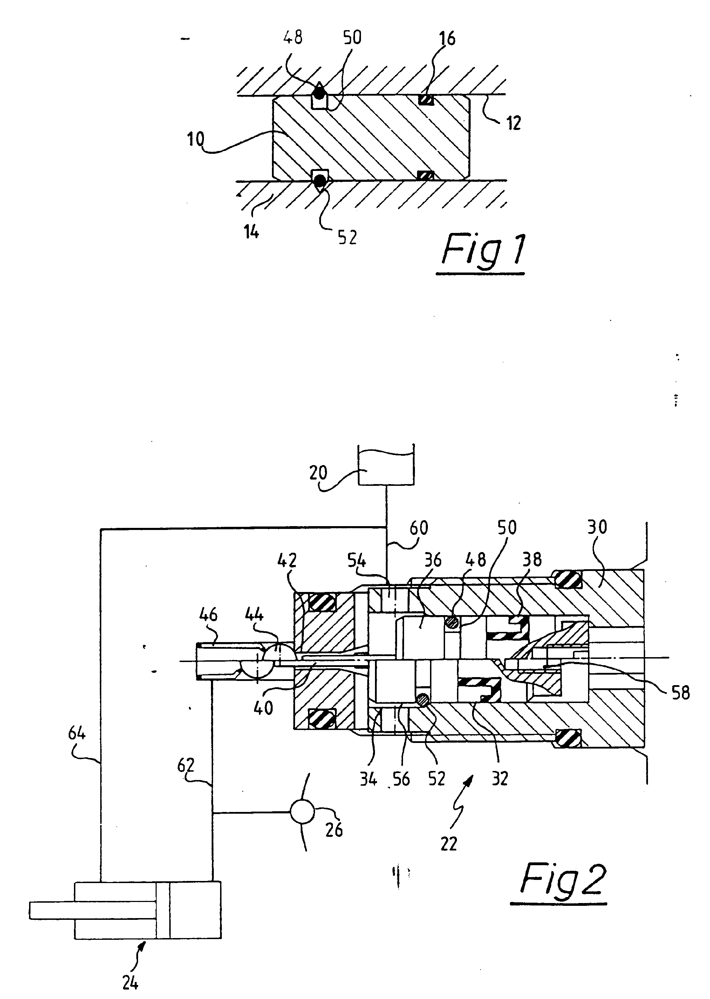

En référence maintenant à la Figure 1, un piston 10 coulisse dans un alésage 12 pratiqué dans un corps 14. Un joint torique d'étanchéité 16 assure par exemple une étanchéité entre les deux chambres opposées du piston. Une gorge annulaire 50 est pratiquée à la périphérie du piston 10 de manière à constituer un logement pour un jonc 48 annulaire flexible lorsque ce dernier est rétraint. Une rainure circulaire 52, pratiquée dans l'alésage 12, présente une taille suffisante pour que le jonc 48 puisse au moins partiellement y pénétrer par décompression lorsque gorge 50 et rainure 22 sont en regard l'une de l'autre. Dans ce but, la rainure présente au moins une rampe pour le jonc 48 dans le sens du déplacement du piston.

De ce fait, lorsque gorge 50 et rainure 52 sont en regard, le jonc 48 immobilise le piston 10 tant que la force exercée sur l'une des faces du piston n'excède pas une valeur déterminée par la flexibilité du jonc 48 et par l'angle de la rampe de la rainure 52. Lorsque cette force excède cette valeur déterminée, le jonc 48 n'a plus aucun effet (sauf peut-être un frottement additionnel), contrairement à un ressort précontraint hélicoïdal habituel.

L'invention est mise en oeuvre dans la soupape de purge d'un circuit hydraulique schématiquement représenté dans la Figure 2 sur laquelle la moitié inférieure de la soupape est représentée dans l'état stable après mise sous pression du liquide dans le circuit.

Ce circuit comprend, de façon classique pour un circuit de freinage équipant les véhicules automobiles, un réservoir de liquide de frein 20 relié, d'une part, par un conduit 60 à un orifice de la soupape de purge 22 et, d'autre part, par un conduit 64 à l'entrée d'un générateur de pression 24, par exemple un maître-cylindre dont la sortie est reliée par un conduit 62, d'une part, à au moins un moteur de frein 26, et d'autre part à un deuxième orifice de la soupape de purge 22.

Cette soupape de purge 22 est réalisée dans un corps fileté extérieurement pour être vissé dans une partie haute du circuit. Ce corps comporte un alésage étagé 32,34 dans lequel coulisse de façon étanche un piston 36 grâce à une coupelle d'étanchéité 38. Le piston 36 est solidaire d'une aiguille 40 pénétrant dans un orifice 42 en vue de repousser une bille 44 à l'encontre d'un ressort hélicoïdal 46 pour ouvrir le clapet en position initiale. Un jonc annulaire 48 est disposé dans une gorge annulaire 50 pratiquée à la périphérie du piston. La rampe 52 est ici constituée par la partie intermédiaire existant entre les deux parties 32,34 de sections différentes de l'alésage.

La soupape de purge est donc livrée au constructeur dans sa position initiale stable, c'est à dire celle représentée dans la partie inférieure sur la Figure. Le jonc 48 immobilise le piston à gauche sur la Figure. Le clapet 42,44 est ouvert, ce qui assure une communication entre les conduits 60,62 par l'intermédiaire des orifices 42,54 et de la chambre annulaire 56 déterminée entre le piston 36 et la partie 34 de plus grande section de l'alésage où coulisse le piston 36.

Le constructeur peut alors, de façon habituelle, purger le circuit à partir du réservoir 20 en créant une dépression dans ce circuit, puis introduire le liquide de frein. Dès lors que la pression dans la chambre annulaire 56 est supérieure à un seuil déterminé par la flexibilité du jonc 48 et l'angle de la rampe 52, le piston est repoussé à droite sur la Figure comme représenté sur la partie supérieure de la coupe de la soupape. Le clapet 44,42 se ferme et la pression dans le circuit confirme la fermeture du clapet, la bille 42 étant poussée par le ressort 46 et par la pression régnant dans le conduit 62.

La soupape de purge qui vient d'être décrite comporte donc bien les deux états stables requis par les constructeurs.

En outre, un alésage borgne fileté 58 est prévu à l'arrière du piston de manière à autoriser et à faciliter une purge classique pour un réparateur, l'ouverture et la fermeture du clapet pouvant être ainsi réalisées par intervention manuelle simple.

De ce qui précède, l'homme du métier aura compris que par jonc, on entend un anneau ouvert par exemple en acier à ressort, comprimé par l'alésage et légèrement détendu lorsqu'il coopère avec une rampe.

## Revendications

1. Soupape de purge (22) pour circuit hydraulique, notamment de freinage, comportant un réservoir de liquide (20), un moteur hydraulique (26) et un mécanisme de mise sous pression du liquide (24), la dite soupape (22) ayant un premier orifice (42) relié au dit moteur (26) et au dit mécanisme (24) par un premier conduit (62) et un second orifice (54) relié par un deuxième conduit (60) au dit réservoir (20) qui est également relié, par un troisième conduit (64) à l'entrée du dit mécanisme (24), les dits premier et deuxième conduits (60,62) communiquant entre eux par l'intermédiaire de la dite soupape (22) pendant la phase de purge initiale du dit circuit hydraulique, et ne communiquant plus dès la première mise sous pression du dit liquide, la dite soupape (22) comprenant un piston (36) pouvant coulisser dans un alésage étagé (32,34) et maintenant ouvert le clapet (44,42) de la dite soupape pendant la dite phase de purge à l'encontre d'un ressort comprimé (46), caractérisé en ce qu'un jonc (48) annulaire flexible est disposé dans une gorge annulaire (50) formée à la périphérie du dit piston (36) et coopère avec une rampe (52) constituée par la partie intermédiaire entre les deux parties de l'alésage étagé (32,34) pour maintenir le dit piston en position initiale stable tant que la pression du dit liquide dans le dit circuit hydraulique est inférieure à un seuil déterminé.

## Patentansprüche

1. Entlüftungsventil (22) für einen Hydraulikkreis, insbesondere einen Bremskreis, mit einem Flüssigkeitsreservoir (20), einem Hydraulikmotor (26) und einem Mechanismus (24), um die Flüssigkeit unter Druck zu setzen, wobei das Ventil (22) eine erste Öffnung (42) aufweist, die über eine erste Leitung (62) mit dem Motor (26) und dem Mechanismus (24) verbunden ist sowie eine zweite Öffnung (54) aufweist, die über eine zweite Leitung (60) mit dem Reservoir (20) verbunden ist, das wiederum über eine dritte Leitung (64) mit dem Eingang des Mechanismus (24) in Verbindung steht, die erste und zweite Leitung (60, 62) über das Ventil (22) während der anfänglichen Entlüftungsphase des Hydraulikkreises miteinander in Verbindung stehen und nicht mehr miteinander verbunden sind, sobald die Flüssigkeit das erste Mal unter Druck gesetzt wird, und wobei das Ventil (22) einen Kolben (36) umfaßt, der in einer gestuften Bohrung (32, 34) gleiten kann und das Ventilglied (44, 42) des Ventils während der Entlüftungsphase entgegen der Kraft einer komprimierten Feder (46) geöffnet hält, dadurch gekennzeichnet, daß ein flexibler Sprengring (48) in einer Ringnut (50) angeordnet ist, die am Umfang des Kolbens (36) ausgebildet ist und mit einer Rampe (52) zusammenwirkt, die durch den Zwischenabschnitt zwischen den beiden Abschnitten der gestuften Bohrung (32, 34) gebildet ist, um den Kolben in der anfänglichen stabilen Lage zu halten, solange der Druck der Flüssigkeit in dem hydraulischen Kreis kleiner als ein vorgegebener Schwellwert ist.

## Claims

1. Bleed valve (22) especially for a hydraulic brake circuit, comprising a fluid reservoir (20), a hydraulic motor (26) and a mechanism for putting the fluid under pressure (24), the said valve (22) having a first port (42) connected to the said motor (26) and to the said mechanism (24) by means of a first conduit (62) and a second port (54) connected by means of a second conduit (60) to the said reservoir (20) which is likewise connected to the inlet of the said mechanism (24) by means of a third conduit (64), the said first and second conduits (60,62) communicating with one another by way of the said valve (22) during the initial bleeding phase of the said hydraulic circuit, and no longer communicating from the moment when the said fluid is first put under pressure, the said valve (22) comprising a piston (36) capable of sliding in a stepped bore (32,34) and keeping the shutter (44,42) of the said valve open during the said bleeding phase counter to a compressed spring (46), characterized in that a flexible annular ring (48) is arranged in an annular groove (50) formed on the periphery of the said piston (36) and interacts with a slope (52) consisting of the intermediate part between the two parts of the stepped bore (32,34), in order to keep the said piston in the stable initial position as long as the pressure of the said fluid in the said hydraulic circuit is below a specific threshold.

_Fig 1_

_Fig 2_